# EUROPEAN PATENT APPLICATION

(11) **EP 3 922 927 A1**
(43) Date of publication of application: **15.12.2021**
(21) Application number: 19914342.1
(22) Date of filing: 05.02.2019
(51) Int. Cl.: F25B 47/02

(54) **FREEZING DEVICE**

(71) Applicant: MITSUBISHI ELECTRIC CORPORATION, Chiyoda-ku Tokyo 100-8310 (JP)
(72) Inventor: ISHIKAWA, Tomotaka, Tokyo 100-8310 (JP); ISHIHARA, Nobuya, Tokyo 100-8310 (JP); NOMOTO, So, Tokyo 100-8310 (JP)
(74) Representative: Pfenning, Meinig & Partner mbB
(86) International application number: PCT/JP2019/004078
(87) International publication number: WO 2020/161804

(57) **Abstract**

A refrigeration apparatus (100) includes a refrigerant circuit in which refrigerant circulates in order of a compressor (1), a first heat exchanger (2), an expansion device (3), and a second heat exchanger (4), and a drain pan (5) arranged below the second heat exchanger (4). The refrigeration apparatus has, as operation modes, a refrigeration mode in which cooling is performed using the second heat exchanger (4), a first defrosting mode in which the second heat exchanger (4) is heated, and a second defrosting mode in which the drain pan (5) is heated. The refrigeration apparatus has the second defrosting mode in which the drain pan (5) is heated. The second defrosting is different from the first defrosting mode in which the second heat exchanger (4) is defrosted. Accordingly, the refrigeration apparatus can restart cooling by the second heat exchanger (4) immediately while facilitating drainage from the drain pan (5).

## Description

### TECHNICAL FIELD

The present disclosure invention relates to a refrigeration apparatus.

### BACKGROUND ART

In a refrigeration apparatus, a defrosting mode for melting frost which forms on an evaporator is provided. For example, Japanese Patent Laying-Open No. 05-126440 (PTL 1) discloses a refrigeration apparatus of reverse hot gas defrosting system capable of heating a drain pan during defrosting of an evaporator.

### CITATION LIST

### PATENT LITERATURE

PTL 1: Japanese Patent Laying-Open No. 05-126440

### SUMMARY OF INVENTION

### TECHNICAL PROBLEM

In Japanese Patent Laying-Open No. 05-126440 (PTL 1), a drain pan is heated during defrosting so as to melt water or a block of ice which has fallen from an evaporator to the drain pan. When defrosting of the evaporator is complete, however, drainage from the drain pan may be hindered if the block of ice remains on the drain pan, and accordingly, it is not appropriate to end the defrosting mode. In contrast, when the defrosting mode is continued, the inside of the refrigeration apparatus cannot be cooled by the evaporator, resulting in an increased temperature of the refrigeration apparatus. When defrosting of the evaporator is complete, thus, cooling by the evaporator is preferably restarted immediately.

The present disclosure has been made to solve the above problem, and has an object to provide a refrigeration apparatus capable of restarting cooling by an evaporator immediately while facilitating drainage from a drain pan.

### SOLUTION TO PROBLEM

The present disclosure relates to a refrigeration apparatus. The refrigeration apparatus includes a refrigerant circuit in which refrigerant circulates in order of a compressor, a first heat exchanger, an expansion device, and a second heat exchanger, and a drain pan arranged below the second heat exchanger. The refrigeration apparatus has, as operation modes, a refrigeration mode in which cooling is performed using the second heat exchanger, a first defrosting mode in which the second heat exchanger is heated, and a second defrosting mode in which the drain pan is heated.

### ADVANTAGEOUS EFFECTS OF INVENTION

The refrigeration apparatus of the present disclosure has the second defrosting mode in which the drain pan is heated. The second defrosting mode is different from the first defrosting mode in which the second heat exchanger is defrosted. Accordingly, the refrigeration apparatus can restart cooling by the second heat exchanger immediately while facilitating drainage from the drain pan.

### BRIEF DESCRIPTION OF DRAWINGS

Fig. 1 shows a configuration of a refrigeration apparatus according to Embodiment 1.
Fig. 2 shows a configuration of a controller 10 that controls the refrigeration apparatus.
Fig. 3 is a flowchart for illustrating control performed by the controller in Embodiment 1.
Fig. 4 is a flowchart for illustrating a process of defrosting a drain pan performed at step S4 of Fig. 3 in detail.
Fig. 5 shows a configuration of a refrigeration apparatus according to Embodiment 2.
Fig. 6 shows a refrigerant flow in a first defrosting mode in the refrigeration apparatus of Embodiment 2.
Fig. 7 is a flowchart for illustrating control performed by a controller in Embodiment 2.

### DESCRIPTION OF EMBODIMENTS

Embodiments of the present disclosure will be described below in detail with reference to the drawings. Although several embodiments will be described below, an appropriate combination of the configurations described in the respective embodiments has been intended at the time of application. The same or corresponding parts will be designated by the same reference numerals, and a description thereof will not be repeated.

### Embodiment 1

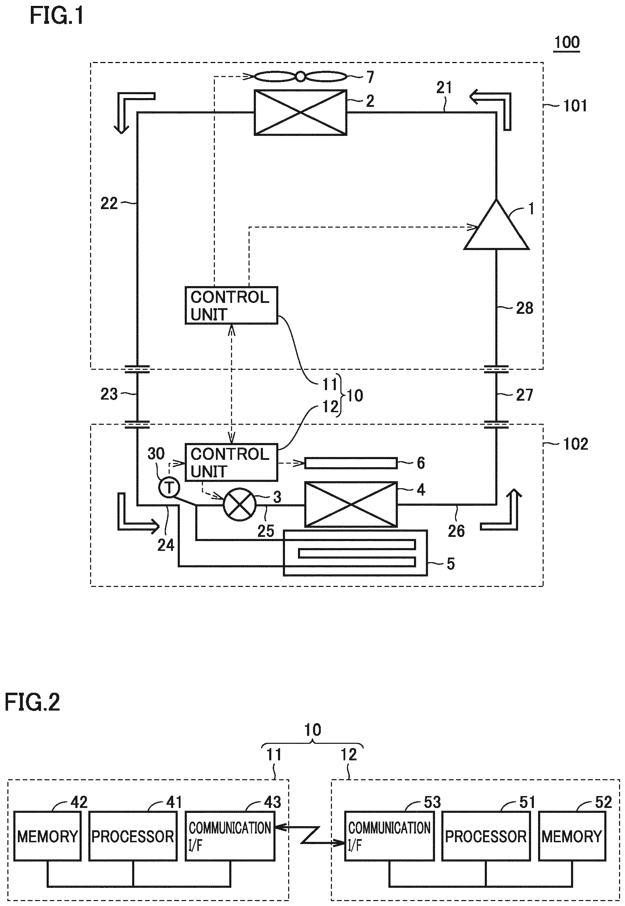

Fig. 1 shows a configuration of a refrigeration apparatus according to Embodiment 1. Referring to Fig. 1, a refrigeration apparatus 100 includes a refrigerant circuit in which refrigerant circulates in order of a compressor 1, a first heat exchanger 2, an expansion device 3, and a second heat exchanger 4, and a drain pan 5 arranged below second heat exchanger 4. In a normal operation (refrigeration mode) of the refrigeration apparatus, first heat exchanger 2 operates as a condenser, and second heat exchanger 4 operates as an evaporator (also referred to as a cooler). Expansion device 3 may be an electronic expansion valve with a variable degree of opening, which may be, for example, a temperature-based automatic expansion valve or a capillary tube with a fixed degree of opening.

Refrigeration apparatus 100 further includes a heater 6 for defrosting, which heats second heat exchanger 4, a fan 7, which sends air to first heat exchanger 2, and a temperature sensor 30, which detects a refrigerant temperature.

Compressor 1, first heat exchanger 2, fan 7, and a control unit 11 are arranged in an outdoor unit 101. A pipe 28, which is connected to an inlet of compressor 1, a pipe 21, which connects a discharge port of compressor 1 with a refrigerant inlet of first heat exchanger 2, and a pipe 22, which is connected to a refrigerant outlet of first heat exchanger 2, are further arranged in outdoor unit 101.

Expansion device 3, second heat exchanger 4, heater 6, drain pan 5, and a control unit 12 are arranged in an indoor unit 102. A pipe 24, which is connected to a refrigerant inlet of expansion device 3, a pipe 25, which connects a refrigerant outlet of expansion device 3 with a refrigerant inlet of second heat exchanger 4, and a pipe 26, which is connected to a refrigerant outlet of second heat exchanger 4, are further arranged in indoor unit 102.

Outdoor unit 101 and indoor unit 102 are connected by extension pipes 23 and 27. Extension pipe 23 connects pipe 22 with pipe 24. Extension pipe 27 connects pipe 26 with pipe 28.

In the case of a configuration in which a refrigeration apparatus is not separated into an outdoor unit and an indoor unit, no extension pipe may be provided, and in such a case, constituent elements shown in Fig. 1 may be housed in one housing, as in a household refrigerator.

In the present embodiment, control unit 11 and control unit 12 cooperate with each other as controller 10 to control compressor 1, fan 7, expansion device 3, and heater 6.

Fig. 2 shows a configuration of controller 10 that controls the refrigeration apparatus. Referring to Fig. 2, control unit 11 includes a processor 41, a memory 42, and a communication interface 43. Communication interface 43 is a device for communications with control unit 12. Processor 41 controls an operation frequency of compressor 1 and a rotation speed of fan 7 in accordance with data stored in memory 42 and information obtained from control unit 12 via communication interface 43.

Control unit 12 includes a communication interface 53, which transmits and receives a signal to and from control unit 11, a processor 51, and a memory 52.

Memories 42, 52 each include, for example, a ROM (Read Only Memory), a RAM (Random Access Memory), and a flash memory. The flash memory stores an operating system, an application program, and various pieces of data. Processor 51 controls heater 6 and expansion device 3.

Controller 10 shown in Fig. 2 is implemented by processors 41, 51 executing the operating systems and the application programs stored in memory 42, 52, respectively. In the execution of the application programs, the various pieces of data stored in memory 42, 52 are referred to. When a plurality of indoor units are provided, control unit 12 is provided in each of the indoor units. In such a case, processors of the plurality of control units cooperate with one another to perform overall control of refrigeration apparatus 100.

The refrigeration apparatus according to the present embodiment has, as operation modes, a refrigeration mode in which cooling is performed using second heat exchanger 4, a first defrosting mode in which second heat exchanger 4 is heated, and a second defrosting mode in which drain pan 5 is heated. In the second defrosting mode, frost on drain pan 5 is melted, and besides, a block of ice or water which has fallen from second heat exchanger 4 to drain pan 5 is heated to facilitate drainage.

Pipe 24 connecting first heat exchanger 2 with expansion device 3 is configured to perform heat exchange with drain pan 5. For example, a part of pipe 24 which is routed is arranged inside or outside of drain pan 5 so as to be in contact with the bottom surface of drain pan 5 in such a manner as to allow heat conduction.

In the first defrosting mode, controller 10 operates heater 6. In order to facilitate defrosting, it is preferable in the first defrosting mode that compressor 1 be stopped to prevent evaporation of refrigerant in second heat exchanger 4. In the first defrosting mode, thus, cooling of the inside of the refrigeration apparatus by second heat exchanger 4 is interrupted.

Contrastingly, in the second defrosting mode, controller 10 causes heater 6 not to operate and sets a rotation speed of fan 7 in the second defrosting mode to be lower than a rotation speed of fan 7 in the refrigeration mode while operating compressor 1. Through such control, a heat radiation amount from the refrigerant in first heat exchanger 2 decreases, and accordingly, the temperature of the refrigerant in pipe 24 which is subjected to heat exchange with drain pan 5 exceeds the temperature of the refrigerant in the refrigeration mode. This facilitates defrosting in drain pan 5 more than in a normal refrigeration mode, while maintaining cooling inside the refrigeration apparatus by second heat exchanger 4 to some extent.

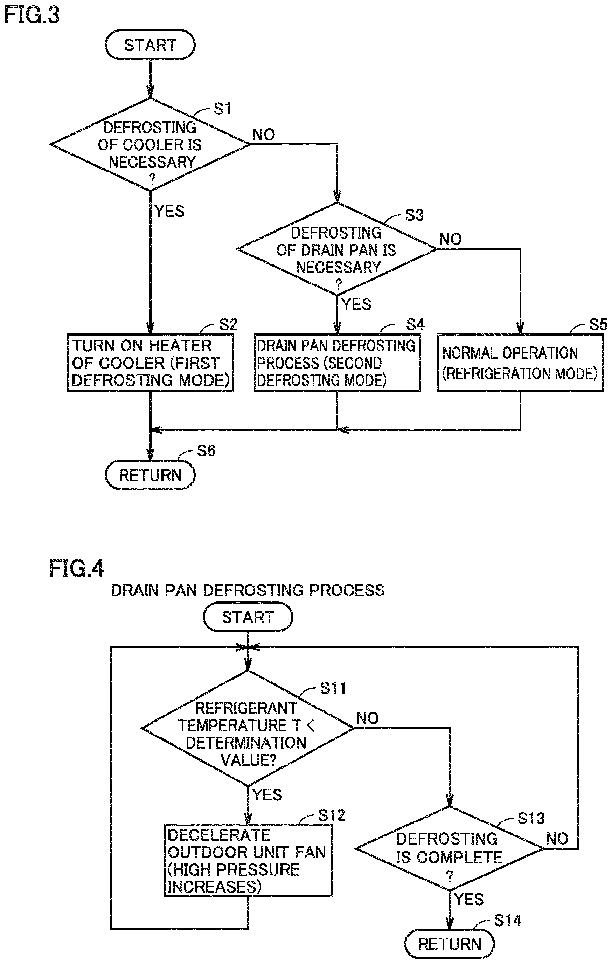

Fig. 3 is a flowchart for illustrating control performed by a controller in Embodiment 1. A process of this flowchart is performed repeatedly every time a certain period of time elapses or a predetermined condition is satisfied during operation of the refrigeration apparatus. Referring to Figs. 1 and 3, controller 10 determines whether defrosting of second heat exchanger 4 (cooler) is necessary at step S1. For example, when defrosting is performed per certain period of time, controller 10 makes a determination of step S1 in accordance with whether a certain period of time has elapsed from the last defrosting of the cooler. The determination of step S1 may be made based on a refrigerant temperature or a state of formation of frost on the cooler, which has been detected.

When defrosting of second heat exchanger 4 (cooler) is necessary (YES at S1), refrigeration apparatus 100 is operated in the first defrosting mode. Specifically, controller 10 turns on heater 6 to heat second heat exchanger 4 at step S2. This melts frost which has formed on second heat exchanger 4.

Contrastingly, when defrosting of second heat exchanger 4 (cooler) is not necessary (NO at S1), controller 10 determines whether defrosting of drain pan 5 is necessary at step S3.

When defrosting of drain pan 5 is necessary (YES at S3), refrigeration apparatus 100 is operated in the second defrosting mode. In this case, controller 10 performs a process of defrosting drain pan 5 at step S4. Contrastingly, when defrosting of drain pan 5 is not necessary (NO at S3), controller 10 performs an operation in the refrigeration mode, which is a normal operation, at step S5.

Fig. 4 is a flowchart for illustrating a process of defrosting a drain pan performed at step S4 of Fig. 3 in detail. When the process of defrosting a drain pan is started, at step S11, controller 10 determines whether a refrigerant temperature T of refrigerant which passes through pipe 24, detected by temperature sensor 30, is lower than a determination value.

When refrigerant temperature T is lower than the determination value (YES at S11), refrigerant temperature T needs to be increased for defrosting in drain pan 5. Controller 10 accordingly reduces the rotation of fan 7 of the outdoor unit at step S12. As a result, a pressure of a high-pressure portion of the refrigerant increases, and refrigerant temperature T increases. Note that at step S12, the operation frequency of compressor 1 may be increased in place of reducing the rotation of fan 7.

When refrigerant temperature T is not less than the determination value (NO at S11), the refrigerant temperature has reached a temperature suitable for defrosting, and accordingly, circulation of the refrigerant is continued in this state. Subsequently, controller 10 determines whether defrosting of drain pan 5 is complete at step S13. When defrosting is not complete (NO at S13), the process returns again to step S11, and defrosting is continued. Contrastingly, when defrosting is complete (YES at S13), the process moves to the flowchart of Fig. 3 at step S14.

As described above, the second defrosting mode in which drain pan 5 alone is defrosted separately from second heat exchanger 4 (cooler) is provided in Embodiment 1.

Specifically, in the first defrosting mode, second heat exchanger 4 (cooler) is defrosted with the heat from heater 6. In the second defrosting mode, heating by heater 6 is stopped to reduce or stop the rotation of fan 7 or increase the operation frequency of compressor 1, thereby increasing the temperature of the refrigerant to drain pan 5.

Thus, a COP (Coefficient Of Performance) of the refrigeration apparatus somewhat decreases, but drain pan 5 alone can be defrosted while cooling the inside of the refrigeration apparatus by second heat exchanger 4 (cooler), so that the inside of the refrigeration apparatus can be maintained even when it takes time for defrosting or drainage of drain pan 5.

### Embodiment 2

In Embodiment 1, heater 6 is used for defrosting of second heat exchanger 4 in the first defrosting mode. Contrastingly, in Embodiment 2, high-temperature, high-pressure gaseous refrigerant which is discharged from compressor 1 is introduced into second heat exchanger 4 in the first defrosting mode.

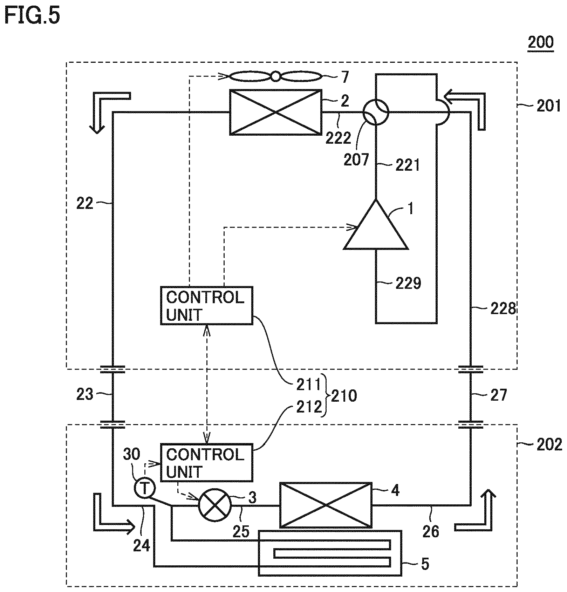

Fig. 5 shows a configuration of a refrigeration apparatus according to Embodiment 2. Referring to Fig. 5, a refrigeration apparatus 200 includes a refrigerant circuit in which refrigerant circulates in order of compressor 1, first heat exchanger 2, expansion device 3, and second heat exchanger 4, and drain pan 5 arranged below second heat exchanger 4. In a normal operation (refrigeration mode) of the refrigeration apparatus, first heat exchanger 2 operates as a condenser, and second heat exchanger 4 operates as an evaporator (also referred to as a cooler). Expansion device 3 may be an electronic expansion valve with a variable degree of opening, which may be, for example, a temperature-based automatic expansion valve or a capillary tube with a fixed degree of opening.

Refrigeration apparatus 200 further includes a four-way valve 207, which changes a direction of circulation of refrigerant, fan 7 that sends air to first heat exchanger 2, and temperature sensor 30 that detects a refrigerant temperature.

Compressor 1, first heat exchanger 2, fan 7, and a control unit 211 are arranged in an outdoor unit 201. A pipe 228, which connects four-way valve 207 with extension pipe 27, a pipe 229, which connects four-way valve 207 with the inlet of compressor 1, a pipe 221, which connects the discharge port of compressor 1 with four-way valve 207, a pipe 222, which connects four-way valve 207 with the refrigerant inlet of first heat exchanger 2, and pipe 22 connected to the refrigerant outlet of first heat exchanger 2 are further arranged in outdoor unit 101.

Expansion device 3, second heat exchanger 4, drain pan 5, and a control unit 212 are arranged in an indoor unit 202. Pipe 24 connected to the refrigerant inlet of expansion device 3, pipe 25 connecting the refrigerant outlet of expansion device 3 with the refrigerant inlet of second heat exchanger 4, and pipe 26 connected to the refrigerant outlet of second heat exchanger 4 are further arranged in indoor unit 202.

Outdoor unit 201 and indoor unit 202 are connected by extension pipes 23 and 27. Extension pipe 23 connects pipe 22 with pipe 24. Extension pipe 27 connects pipe 26 with pipe 228.

In the case of a configuration in which a refrigeration apparatus is not separated into an outdoor unit and an indoor unit, no extension pipe may be provided, and in such a case, the constituent elements shown in Fig. 5 may be housed in one housing as in a household refrigerator.

In the present embodiment, control unit 211 and control unit 212 cooperate with each other as controller 210 to control compressor 1, fan 7, expansion device 3, and four-way valve 207. Control unit 211, control unit 212, and controller 210 have configurations similar to those of control unit 11, control unit 12, and controller 10 shown in Fig. 2.

In the refrigeration mode and the second defrosting mode, four-way valve 207 is set to cause pipe 221 and pipe 222 to communicate with each other and pipe 228 and pipe 229 to communicate with each other as indicated by the solid line of Fig. 5. As a result, refrigerant circulates in the direction indicated by the arrows of Fig. 5 in the refrigeration mode and the second defrosting mode.

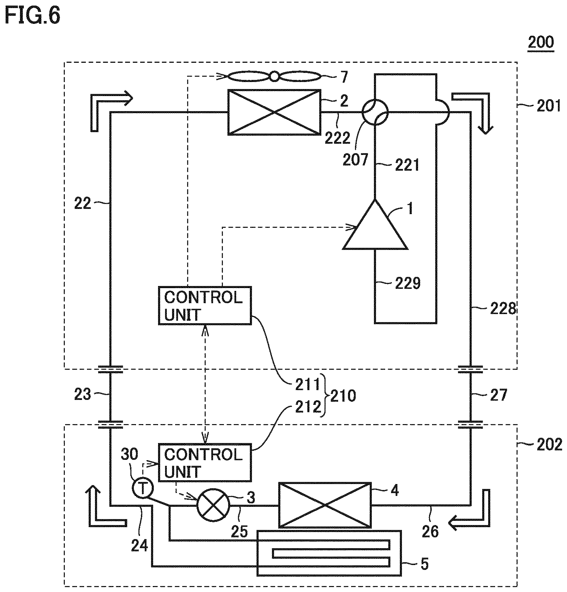

Fig. 6 shows a refrigerant flow in the first defrosting mode in the refrigeration apparatus of Embodiment 2. Referring to Fig. 6, in the first defrosting mode, four-way valve 207 is set to cause pipe 221 and pipe 228 to communicate with each other and pipe 222 and pipe 229 to communicate with each other as indicated by the solid line of Fig. 6. As a result, refrigerant circulates in the direction indicated by the arrows of Fig. 6 in the first defrosting mode.

Specifically, four-way valve 207 is configured to, in the first defrosting mode, change the direction of circulation of refrigerant in the refrigerant circuit to a backward direction in which refrigerant circulates in order of compressor 1, second heat exchanger 4, expansion device 3, and first heat exchanger 2, which is opposite to a forward direction.

In the refrigeration apparatus of Embodiment 2, four-way valve 207 is set such that the direction of circulation of refrigerant is the forward direction in the refrigeration mode. In this case, first heat exchanger 2 operates as a condenser, and second heat exchanger 4 operates as an evaporator.

In contrast, four-way valve 207 is set such that the direction of circulation of refrigerant is the backward direction in the first defrosting mode. In this case, since first heat exchanger 2 operates as an evaporator and second heat exchanger 4 operates as a condenser, cooling of the inside of the refrigeration apparatus cannot be continued and is interrupted.

In contrast, four-way valve 207 is set such that the direction of circulation of refrigerant is the forward direction in the second defrosting mode. Pipe 24 connected between first heat exchanger 2 and expansion device 3 is configured to perform heat exchange with drain pan 5 also in refrigeration apparatus 200 of Embodiment 2 as in refrigeration apparatus 100 of Embodiment 1.

The rotation speed of fan 7 in the second defrosting mode is set to be lower than the rotation speed of fan 7 in the refrigeration mode. This increases the temperature of refrigerant flowing through pipe 24, thus facilitating heating of drain pan 5.

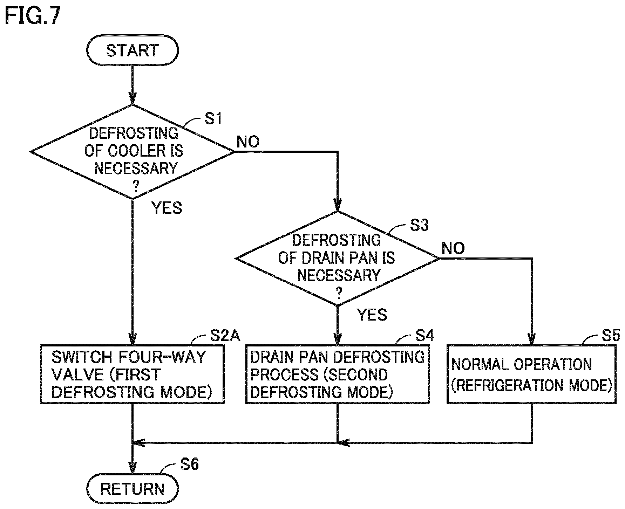

Fig. 7 is a flowchart for illustrating control performed by a controller in Embodiment 2. The process of this flowchart is performed repeatedly every time a certain period of time elapses or a predetermined condition is satisfied during operation of the refrigeration apparatus. Referring to Figs. 5 and 7, at step S1, controller 210 determines whether defrosting of second heat exchanger 4 (cooler) is necessary. For example, when defrosting is performed per certain period of time, controller 210 makes a determination of step S1 in accordance with whether a certain period of time has elapsed from the last defrosting of the cooler. The determination of step S1 may be made based on a refrigerant temperature or a state of formation of frost on the cooler, which has been detected.

When defrosting of second heat exchanger 4 (cooler) is necessary (YES at S1), refrigeration apparatus 200 is operated in the first defrosting mode. Specifically, controller 210 sets four-way valve 207 as shown in Fig. 6 at step S2A so as to circulate refrigerant in the backward direction indicated by the arrows of Fig. 6. As a result, high-temperature gaseous refrigerant from compressor 1 flows into second heat exchanger 4, thus melting the frost which has formed on second heat exchanger 4.

Contrastingly, when defrosting of second heat exchanger 4 (cooler) is not necessary (NO at S1), controller 210 determines whether defrosting of drain pan 5 is necessary at step S3.

When defrosting of drain pan 5 is necessary (YES at S3), refrigeration apparatus 200 is operated in the second defrosting mode. In this case, controller 210 performs a process of defrosting drain pan 5 at step S4. In the second defrosting mode, refrigerant flows in the direction indicated by the arrows of Fig. 5. The second defrosting mode is as described with reference to the flowchart of Fig. 4, which will not be described repeatedly.

Contrastingly, when defrosting of drain pan 5 is not necessary (NO at S3), controller 210 performs an operation in the refrigeration mode, which is a normal operation, at step S5. In the refrigeration mode, refrigerant flows in the direction indicated by the arrows of Fig. 5.

The second defrosting mode in which drain pan 5 alone is defrosted separately from second heat exchanger 4 (cooler) is provided in Embodiment 2 as in Embodiment 1, as described above.

Specifically, in the first defrosting mode, second heat exchanger 4 (cooler) is defrosted with the heat of high-temperature, high-pressure gaseous refrigerant by setting the direction of circulation of refrigerant to the backward direction with four-way valve 207. In the second defrosting mode, the direction of circulation of refrigerant is returned to the forward direction to reduce or stop the rotation of fan 7 or increase the operation frequency of compressor 1, thereby increasing the temperature of the refrigerant to drain pan 5.

Thus, a COP (Coefficient Of Performance) of the refrigeration apparatus somewhat decreases, but drain pan 5 alone can be defrosted while cooling the inside of the refrigeration apparatus by second heat exchanger 4 (cooler), so that cooling of the inside of the refrigeration apparatus can be maintained even when it takes time for defrosting or drainage of drain pan 5.

The embodiments disclosed herein have been presented for the purpose of illustration and non-restrictive in every respect. It is therefore intended that the scope of the present disclosure is defined by claims, not only by the embodiments described above, and encompasses all modifications and variations equivalent in meaning and scope to the claims.

### REFERENCE SIGNS LIST

1 compressor; 2 first heat exchanger; 3 expansion device; 4 second heat exchanger; 5 drain pan; 6 heater; 7 fan; 10, 210 controller; 11, 12, 211, 212 control unit; 21, 22, 24, 25, 26, 28, 221, 222, 228, 229 pipe; 23, 27 extension pipe; 30 temperature sensor; 41, 51 processor; 42, 52 memory; 43, 53 communication interface; 100, 200 refrigeration apparatus; 101, 201 outdoor unit; 102, 202 indoor unit; 207 four-way valve.

## Claims

1. A refrigeration apparatus comprising:
a refrigerant circuit in which refrigerant circulates in order of a compressor, a first heat exchanger, an expansion device, and a second heat exchanger; and
a drain pan arranged below the second heat exchanger, wherein
the refrigeration apparatus has, as operation modes, a refrigeration mode in which cooling is performed using the second heat exchanger, a first defrosting mode in which the second heat exchanger is heated, and a second defrosting mode in which the drain pan is heated.

2. The refrigeration apparatus according to claim 1, further comprising:
a heater configured to heat the second heat exchanger;
a fan configured to send air to the first heat exchanger; and
a refrigerant pipe connected between the first heat exchanger and the expansion device, the refrigerant pipe being configured to perform heat exchange with the drain pan, wherein
the heater operates in the first defrosting mode,
the heater does not operate in the second defrosting mode, and
a rotation speed of the fan in the second defrosting mode is set to be lower than a rotation speed of the fan in the refrigeration mode.

3. The refrigeration apparatus according to claim 1, further comprising:
a four-way valve configured to change a direction of circulation of the refrigerant in the refrigerant circuit between a forward direction and a backward direction, the backward direction being opposite to the forward direction, the refrigerant circulating in order of the compressor, the second heat exchanger, the expansion device, and the first heat exchanger in the backward direction;
a fan configured to send air to the first heat exchanger; and
a refrigerant pipe connected between the first heat exchanger and the expansion device, the refrigerant pipe being configured to perform heat exchange with the drain pan, wherein
in the refrigeration mode, the four-way valve is set such that the direction of circulation is the forward direction,
in the first defrosting mode, the four-way valve is set such that the direction of circulation is the backward direction,
in the second defrosting mode, the four-way valve is set such that the direction of circulation is the forward direction, and
a rotation speed of the fan in the second defrosting mode is set to be lower than a rotation speed of the fan in the refrigeration mode.
